# EUROPEAN PATENT APPLICATION

(11) **EP 4 596 157 A1**
(43) Date of publication of application: **06.08.2025**
(21) Application number: 24218178.2
(22) Date of filing: 06.12.2024
(51) Int. Cl.: B23K 20/10, B29C 65/08

(54) **ULTRASONIC HORN WITH FLAT ULTRASONIC BOOSTER FOR INCREASED STIFFNESS**

(30) Priority: 07.12.2023 US 202318532729
(71) Applicant: Dukane IAS, LLC, St. Charles, IL 60174 (US)
(72) Inventor: KLINSTEIN, Leo, St. Charles 60174 (US); VASKO, Petr, St. Charles 60174 (US); E. ALDAZ, Robert, St. Charles 60174 (US)
(74) Representative: Kalkoff & Partner Patentanwälte mbB

(57) **Abstract**

An ultrasonic welding system having an ultrasonic horn with a flat ultrasonic booster to provide increased stiffness to the ultrasonic horn (sonotrode) and allowing for wider welding surface applications while minimizing deflections of the horn under force. The flat booster has a small footprint but provides high stiffness to the horn. The horn and booster can be a unitary piece and can be manufactured, for example, by machining a solid plate of metal into the horn with integrated booster. Optional internal compliant tabs can be attached to side plates to enhance stiffness along a vertical direction (orthogonal to a direction of the back and forth movement of the part-interfacing surface(s) of the horn), while allowing a scrubbing back and forth motion along the ultrasonic-energy-imparting surface(s) of the horn. An optional cut-and-seal feature on the horn or anvil or both is also disclosed.

## Description

### BACKGROUND OF THE INVENTION

In traditional ultrasonic welding, one ultrasonic stack is energized, and the part is pressed between the energized stack and a non-energized anvil. The traditional configuration of an ultrasonic stack assembly includes a transducer coupled to an ultrasonic booster, which is coupled to an ultrasonic horn (or sonotrode). The ultrasonic booster typically has a cylindrical or round shape (and so do the transducers), and the round cross-section of the booster abuts against an end of the ultrasonic horn. An example of such cylindrical boosters can be seen in U.S. Patent No. 11,426,946 (see, e.g., FIGs. 5A, 6A). Ultrasonic sonotrodes of this type can experience significant deflections under high side-loaded forces. Moreover, as there are multiple interfaces between the horn, boosters, and transducers, these interfaces can over time become failure points due to heating, wear, and improper frequency tuning. The tendency to deflect under high side-loaded forces also limits the overall width of surfaces available for welding, thereby limiting the type of parts and applications using ultrasonic welding.

A need exists for a stiffer horn assembly with reduced deflections under high forces and longer available width for welding surfaces. The present disclosure addresses this and other needs.

### SUMMARY OF THE INVENTION

The ultrasonic horns disclosed herein have greater vertical cross section, which results in a greater cross-sectional moment of inertia providing much greater stiffness (i.e., much less deflection) compared to existing ultrasonic horns. The horn structure also provides a greater weld area compared to existing horns. The horn features an integrated planar booster that can be machined out of a solid metal plate, thereby simplifying operation compared to cylindrical-type boosters while still minimizing the total number of interfaces among the booster, transducer, and horn. This integrated structure also minimizes machining time and wasted material. Moreover, the greater stiffness allows the overall welding width of the horn to be increased.

According to an aspect of the present disclosure, an ultrasonic welding system having an ultrasonic stack assembly, includes: an ultrasonic stack assembly including an ultrasonic horn and a first transducer arranged to impart a first ultrasonic energy into the ultrasonic horn, the ultrasonic horn having a first part-interfacing surface configured to contact a part to be joined, the ultrasonic horn having a major surface adjacent to the first part-interfacing surface and an ultrasonic booster having a generally flat shape and a major surface that is generally coplanar with the major surface of the ultrasonic horn; one or more controllers operatively coupled to the ultrasonic stack assembly, the one or more controllers operatively being configured to: apply the first ultrasonic energy through the ultrasonic horn via the first transducer to cause the first part-interfacing surface to move back and forth along its length as the first ultrasonic energy is applied by the first transducer to the horn.

The ultrasonic horn and the ultrasonic booster can be machined from a single plate of metal such that the ultrasonic horn and the ultrasonic booster constitute a single, integrated piece.

The ultrasonic stack assembly can include a second transducer arranged to impart a second ultrasonic energy into the horn. The one or more controllers can be configured to cause the second ultrasonic energy to be applied through the ultrasonic horn simultaneously with the first ultrasonic energy. The first and second ultrasonic energies can be synchronized in at least one of frequency or phase.

The first and second ultrasonic energies can be synchronized in both frequency and phase.

The ultrasonic horn has a length along a side thereof and a width along an end thereof, the length being longer than the width, and the ultrasonic booster can extend away from the end of the ultrasonic horn, the end being interfaced with the first transducer. The ultrasonic horn and the ultrasonic booster can have a generally flat profile along coplanar surfaces thereof.

A weld or can be is formed at the first part-interfacing surface without application of any external heat energy toward the weld or seal.

The ultrasonic horn can have a second part-interfacing surface along an opposite side to a side of the first part-interfacing surface.

The ultrasonic welding assembly can further include a fixed bearing mount through which a portion of the ultrasonic booster passes to interface with the first transducer.

The ultrasonic horn can have a second part-interfacing surface that is on an opposite side of the first part-interfacing surface. The one or more controllers can be configured to cause the ultrasonic horn to rotate while at least the first ultrasonic energy is imparted to at least one of the first part-interfacing surface or the second part-interfacing surface. The ultrasonic horn can include a cutting element arranged relative to the first part-interfacing surface and configured to score or cut a portion of the part to be joined.

The ultrasonic horn can include a compliant tab that is internal to the horn and configured to connect with a plate arranged on an exterior of the ultrasonic horn. The tab can be a multiple tabs, each being internal to the horn and configured to connect with respective mounting points on the plate to provide a node to inhibit internal movement or deflection of the ultrasonic horn relative to anti-nodal points along the ultrasonic horn.

A part can be made using the systems or methods disclosed herein. The part can have a height of at least 40mm.

The portion of the ultrasonic booster that passes through the fixed bearing mount can modify a vibrational amplitude passing between the first transducer and the ultrasonic horn such that the portion of the ultrasonic booster has a reduced width dimension relative to an overall width dimension of the ultrasonic horn. The modification can be a tuned half-wave component relative to the first ultrasonic energy. The compliant tab can extend into an opening in the horn formed along an internal surface of the horn and is attached to the plate.

The ultrasonic booster can be coupled to the ultrasonic horn and to the first transducer. The ultrasonic booster can have a generally square or rectangular cross-section.

The ultrasonic horn can be at least two ultrasonic horns positioned side by side relative to one another, each of the at least two ultrasonic horns being integrated with or coupled to a generally flat ultrasonic booster. The ultrasonic transducer assembly can include a second transducer coupled to a second of the at least three ultrasonic horns. The first transducer and the second transducer can be on opposite sides of the ultrasonic transducer assembly.

The ultrasonic horn can be at least two ultrasonic horns positioned side by side relative to one another, each of the at least two ultrasonic horns being integrated with or coupled to a generally flat ultrasonic booster. The ultrasonic transducer assembly can include a second transducer coupled to a second of the at least three ultrasonic horns, the first transducer and the second transducer being on the same side of the ultrasonic transducer assembly.

The ultrasonic booster can be a tuned as a half-wave component.

The system can further include an anvil arranged at a distance from the first part-interfacing surface of the ultrasonic horn, the anvil including a cutting element arranged relative to a part-interfacing surface of the anvil and configured to score or cut a portion of the part to be joined.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.
FIG. 1A illustrates an ultrasonic stack assembly including a horn with an integrated flat booster surrounded by side plates according to an aspect of the present disclosure. Optional fasteners are not shown for ease of illustration.
FIG. 1B is a cross-sectional view of the ultrasonic stack assembly shown in FIG. 1A with the side plates removed.
FIG. 1C is a perspective view of portions of the ultrasonic stack assembly shown in FIG. 1A with the side plates and fixed mounts removed to reveal the ultrasonic horn and flat ultrasonic booster.
FIG. 1D is a perspective view of the same assembly shown in FIG. 1C rotated slightly to reveal other details of the assembly.
FIG. 1E is a top view of a portion of the horn shown in FIG. 1C with the side plate removed to reveal optional compliant mounting tabs with attachments to secure the stack to the side plates shown in FIG. 1A. The optional compliant mounting tabs and corresponding bars 134 further reduce deflection by minimizing the unsupported span of the horn but are not essential to invention.
FIG. 1F is an illustration of a horn/anvil configuration capable of performing a cut-and-seal operation that joins portions of parts together while scoring or cutting through the parts to separate them.
FIG. 2 is a color illustration of an FEA analysis of the assembly shown in FIG. 1A to show an exaggerated direction of flexure or movement of the stack as the transducer imparts ultrasonic energy into the horn via the booster.
FIG. 3 is a color illustration of the same assembly shown in FIG. 2 with the side plates removed to show the nodal and anti-nodal regions of stress distribution during operation (when ultrasonic energy is imparted by the transducer).
FIG. 4 is a color illustration of a cross-section of the assembly shown in FIG. 3.
FIG. 5 is a color illustration of an FEA analysis of the assembly shown in FIG. 1A under a deformation load to show the deflection of the horn under the deformation load.
FIG. 6 is an example arrangement of multiple horns according to the present disclosure positioned side-by-side with transducers on alternating ones of the horns on both sides of the assembly.
FIG. 7 is another example arrangement of multiple horns according to the present disclosure positioned side-by-side with one transducer on each horn on the same side of the assembly.

### DETAILED DESCRIPTION

A key feature of the present disclosure is the shape or profile of the ultrasonic booster. Conventional boosters have a cylindrical shape with a round or circular cross-section and when used are coupled between the ultrasonic transducer and the ultrasonic horn. According to the present disclosure, the booster herein has a generally flat profile that is coplanar with the horn and has a non-round cross-section, such as square or rectangular.

Typically, the ultrasonic transducer is connected in line with an ultrasonic booster and a sonotrode (also commonly called a "horn" in the ultrasonic welding industry), both of which are normally tuned to have a resonant frequency that matches that of the ultrasonic transducer (sometimes called a converter). A typical ultrasonic booster, which is structured to permit mounting of the ultrasonic transducer assembly (or "stack" as it is commonly called), is typically a tuned half-wave component that is configured to increase or decrease the vibrational amplitude passed between the converter (transducer) and sonotrode (horn). The amount of increase or decrease in amplitude is referred to as its gain. The horn, which is typically in the shape of a tapering metal bar, is structured to augment the oscillation displacement amplitude provided by the ultrasonic transducer and thereby increase or decrease the ultrasonic vibration and distribute it across a desired work area. An ultrasonic generator generates the energy to the transducer, an example of which is described in U.S. Patent No. 7,475,801 and is commercially available from Dukane under any of the iQ^{™} line of ultrasonic generators.

As described further below, the ultrasonic booster according to the present disclosure can be formed as an integral piece with the ultrasonic horn, such as machined from a single piece of metal, or can be coupled directly to the horn. The booster according to the present disclosure has a generally flat profile having a relatively small footprint but relatively high stiffness. The greater height and orientation of the greater cross-sectional moment of inertia corresponds to the direction in which the load is applied during normal operation. This orientation maximizes the effective stiffness while minimizing the horn's complexity. The booster design according to the present disclosure allows a wider welding surface, for example, such that a part-interfacing surface of the horn can be lengthened to suit wider welding applications without compromising a stiffness across a length of the horn. Moreover, the booster according to the present disclosure reduces a total number of interfaces along the entire assembly. Non-limiting applications of the assemblies disclosed herein include flow wrap seal packaging applications or any other application where consistent application and increased weld depth across the entire width of the part to be joined is important, such as thin-film, ultrasonic metal welding, and non-woven materials applications. Advantageously, the booster of the present disclosure allows the same assembly to be used for both thick and thin parts to be joined.

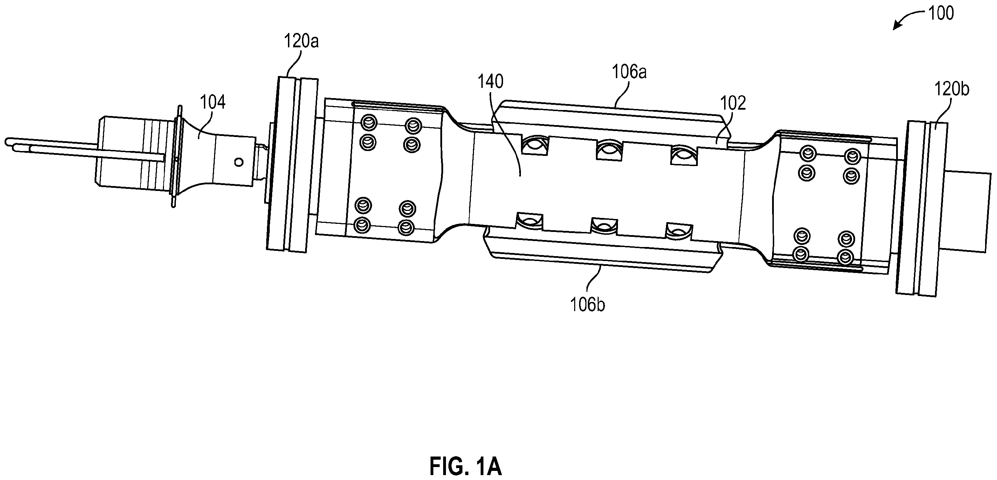

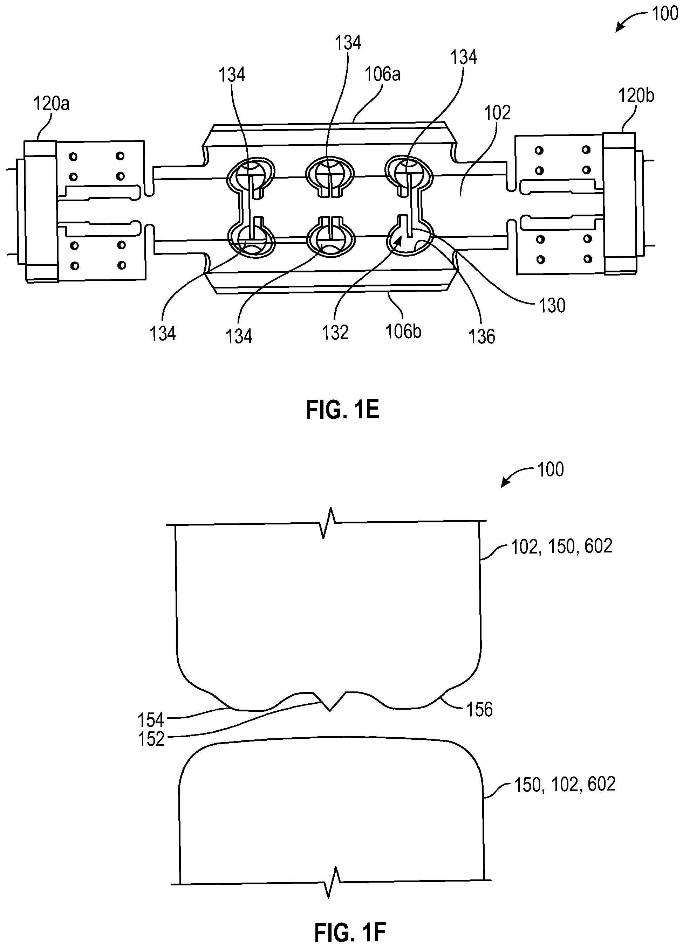

FIG. 1A is an ultrasonic welding system having an ultrasonic stack assembly 100 for applying ultrasonic energy to parts to be joined together by application of the ultrasonic energy through an ultrasonic horn 102. Those skilled in the art of ultrasonic welding will appreciate that a typical ultrasonic welding system includes a fixed frame (not shown) along with other components such as one or more anvils (see, e.g., the anvil 150 shown in FIG. 1F) to receive parts to be joined. These components are not necessary for an understanding of the invention and for ease of illustration, only the main components (e.g., transducer, booster, horn) are shown.

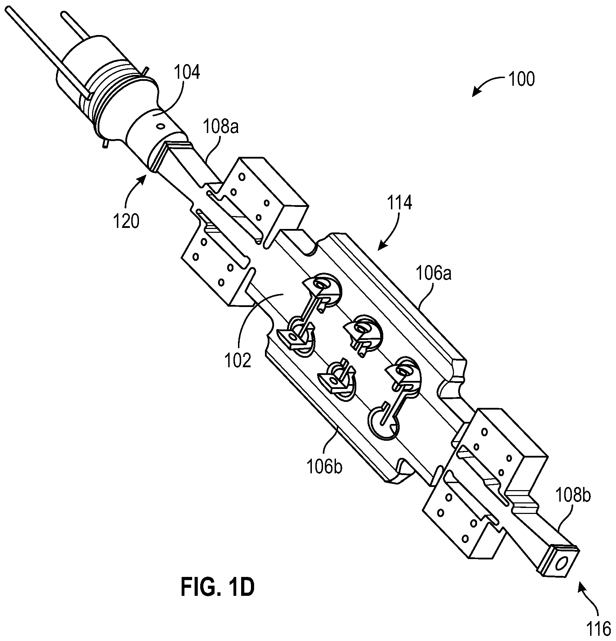

The ultrasonic stack assembly 100 includes a first ultrasonic transducer 104 (variously referred to as a converter), a first ultrasonic booster 108a, an optional second ultrasonic booster 108b, and the ultrasonic horn 102 (sometimes referred to as a horn or sonotrode for brevity). An optional second ultrasonic transducer (not shown) can be positioned on the end of the assembly opposite to the end where the first ultrasonic transducer 104 is shown mounted to the booster 108a. In applications where only one ultrasonic booster is needed, a second ultrasonic booster 108b can be eliminated. In applications where a second ultrasonic transducer is desired, the second ultrasonic transducer can be mounted to the end 116 (see FIG. 1D) of the assembly 100.

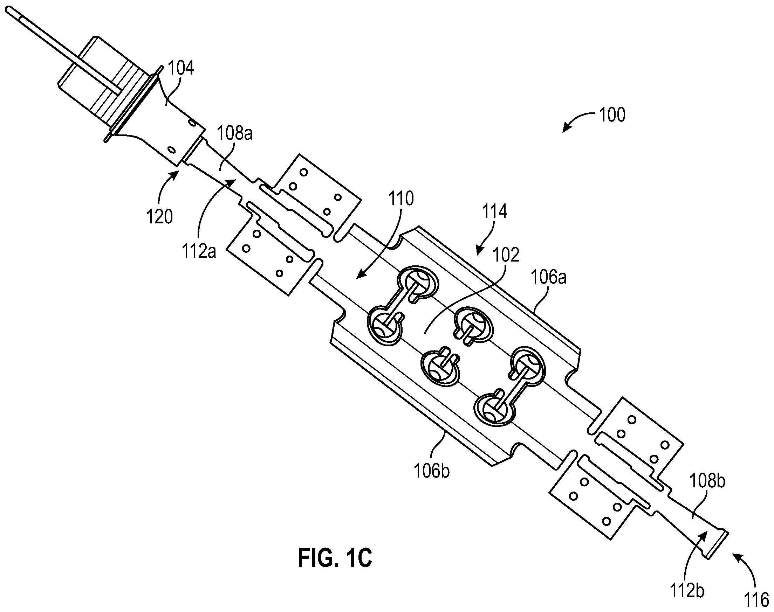

The ultrasonic horn or sonotrode 102 has a first part-interfacing surface 106a configured to contact a part (not shown) to be joined. The ultrasonic horn 102 has a major surface 110 (best seen in FIG. 1C) adjacent to the first part-interfacing surface 106a. Each of the first and optional second ultrasonic boosters 108a, 108b has a generally flat shape and a major surface 112a, 112b that is generally coplanar with the major surface 110 of the ultrasonic horn 102. Those familiar with the art of ultrasonic welding will appreciate that the parts to be joined are introduced between the first part-interfacing surface 106a or 106b and one or more anvils (not shown) while the ultrasonic energy from the transducer 104 is imparted through the horn 102. By "major surface," it is meant that a continuous surface exceeds other surfaces of the structure. For example, compared to the part-interfacing surface 106a, 106b, which is generally elongated and narrow, the major surface 110 of the ultrasonic horn 102 has a much larger surface area by comparison. The part-interfacing surfaces 106a, 106b of the horn 102 would not be considered to be major surfaces of the horn 102. Likewise, the booster 108a has a major surface 112a, which has a greater surface area, for example, compared to an end surface of the booster 108a, which is coupled at an interface 120 to the transducer 104. The end of the booster 108a would not be considered a major surface of the booster 108a.

A key feature of the boosters 108a, 108b according to the present disclosure is that unlike prior art boosters, each of these boosters 108a, 108b is generally flat and has a non-circular cross-section. Conventional boosters have a circular or round cross-section and have a volumetric cylindrical form. The boosters 108a, 108b of the present disclosure are generally flat. By generally flat, it is meant that to the skilled person, the overall major surface 112a, 112b of the booster 108a, 108b is flat, even though there may be undulations or other non-flat features along the surface. The majority of the surface lies in one plane, even though there may be perturbations, slight protrusions, dips, holes, channels, etchings, or similar features extending out of the plane in other areas of the same surface. Such relatively minor deviations from the plane of the major surface 112a, 112b are not intended to fall outside the scope of what is meant by "generally" flat. In the illustrations shown in FIGS. 1A-1D, the major surface 112a, 112b is completely flat and lies in the same plane as the maj or surface 110 of the horn 102.

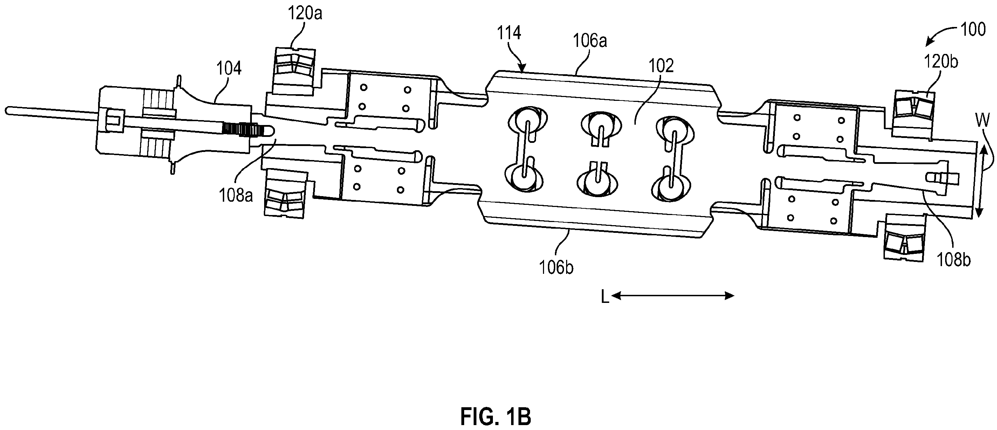

The ultrasonic welding system conventionally includes one or more controllers (not shown) operatively coupled to the ultrasonic transducer assembly 100. The one or more controllers are configured to apply the first ultrasonic energy through the ultrasonic horn 102 via the first transducer 104 to cause the first part-interfacing surface 106a, 106b to move back and forth along its length, L, (see FIG. 1B) as the first ultrasonic energy is applied by the first transducer 104 to the horn 102. This back and forth motion can be colloquially referred to as a "scrubbing" motion due to its resemblance to the same. Another form of motion that is contemplated by the present disclosure involves an extending motion at the part-interfacing surface rather a than back-and-forth scrubbing motion. Coupled with the imparting of ultrasonic energy to the parts to the joined, the scrubbing motion along the length, L, of the part-interfacing surface 106a, 106b ensures a uniform and rapid joining of the parts without any external matter or heat or from any other external energy source (except via the transducer 104) being applied to the parts. The one or more controllers can control amplitude, frequency and/or a phase of the ultrasonic energy outputted by the transducer 104, whose amplitude can be adjusted (increased or decreased) by the booster 108a, 108b before being transmitted to the sonotrode or horn 102. This is due to the greater vertical cross-section having a greater cross-sectional moment of inertia, which provides much greater stiffness compared to conventional ultrasonic transducer assemblies. The horn 102 disclosed herein provides for a uniform amplitude distribution along the horn's length, compared to conventional horns. Such increased uniform amplitude along with the scrubbing motion enables the welding of thinner and more fragile films and materials compared to conventional designs.

The booster 108a, 108b can be integrated with the horn 102 or can be a separate piece that is attached or coupled to the horn 102. In the example shown in FIGS. 1A-1D, the horn 102 and the booster 108a, 108b are machined or milled from a single plate of metal such that the ultrasonic horn 102 and the ultrasonic booster 108a or 108b constitute a single, integrated piece. In this case, no coupling or interfacing of the horn 102 to the booster 108 is required as the booster transitions directly to the horn without requiring any additional interfacing. This integrated embodiment provides increased overall stiffness compared to conventional booster-horn couplings, significantly suppressing deflections or deformations of the assembly 100 under large forces (e.g., up to 2-4 times less deflection when subjected to 3000 N of weld force).

An optional second transducer (not shown) like the transducer 104 can be arranged to impart a second ultrasonic energy into the horn 102. The optional second transducer is coupled to the booster 108b in the same manner as the first transducer 104 is coupled to the booster 108a. The one or more controllers are configured to cause the second ultrasonic energy to be applied through the ultrasonic horn 102 simultaneously with the first ultrasonic energy from the first transducer 104. The first and second ultrasonic energies can be synchronized in frequency or phase or both frequency and phase.

The ultrasonic horn 102 has a length, L (FIG. 1B), along a side thereof and a width, W, along an end thereof, where L > W. The third dimension can be referred to as a depth, thickness, or height of the horn 102. The ultrasonic booster 108a,b extends away from the end (which can be an internal area) of the horn 102, which interfaces with the first transducer 104 at the interface 120. The ultrasonic horn 102 and the ultrasonic booster 108a, 108b have a generally flat profile along coplanar surfaces 110, 112a or 110, 112b of the horn 102 and boosters 108a,b, respectively.

The optional second part-interfacing surface 106b of a horn 102 is along an opposite side to a side of the first part-interfacing surface 106a as best seen in FIG. 1C. In this example, the horn 102 can be rotated so that two sets of parts can be joined with each full rotation of the horn 102 relative to a longitudinal axis running along a length, L, of the horn 102.

The ultrasonic welding assembly 100 includes a fixed bearing mount 120a, 120b (FIG. 1A) through which a portion of the ultrasonic booster 108a, 108b, respectively, passes to interface with the first transducer 104 at the interface 120 (in the case of the booster 108a). A similar interface would be present between an optional second transducer (not shown) and the booster 108b.

As can be best seen in FIG. 1E, the ultrasonic horn 102 includes a compliant tab 130 that is internal (see internal surface 136) to the horn 102 and configured to connect with a plate 140 (FIG. 1A) arranged on an exterior of the ultrasonic horn 102. In the example shown in FIG. 1E, there are six compliant tabs 130, but fewer or more tabs can be used depending on the number of desired nodes and anti-nodes for a particular application. The tab 130 is internal to the horn 102, as can be seen in FIG. 1E, and can flex thanks to a surrounding opening 132 that allows movement of the tab 130. The tab 130 is coupled to a mounting device 134, which in turn is secured to the side plate 140 provided on an exterior of the horn 102. The side plate 140 adds additional rigidity or stiffness to the assembly 100. Each tab 130 operates as a node to inhibit internal movement or deflection of the ultrasonic horn 102 relative to anti-nodal points along the ultrasonic horn 102, as discussed further below. For example, the tabs 130 operate to inhibit up and down (vertical) movement of the horn but allow more lateral (horizontal) movement to facilitate the back and forth scrubbing motion.

As can be seen in the cross-sectional view of FIG. 1B, the portion of the ultrasonic booster 108a that passes through the fixed bearing mount 120a modifies a vibrational amplitude passing between the first transducer 104 and the ultrasonic horn 102 such that the portion of the ultrasonic booster 102 has a reduced width dimension, W, relative to an overall width dimension of the ultrasonic horn. As shown in FIG. 1B, the length, L, of the horn 102 is longer than the width, W, and the part-interfacing surfaces 106a, 106b extend along the length, L, of the horn 102 orthogonal to its width, W. The compliant tabs 130 extend along the width, W, as shown in FIG. 1E, to facilitate the back and forth motion along the part-interfacing surfaces 106a, 106b of the horn 102 while the ultrasonic energy is being imparted therethrough by the transducer 104. For example, the modified amplitude can correspond to a tuned half-wave component relative to the first ultrasonic energy originating from the transducer 104.

As mentioned above, the ultrasonic booster 108a does not have to be integrated with the horn 102 and alternately can be coupled to the ultrasonic horn 102 and to the first transducer 104. The ultrasonic booster having a generally square or rectangular cross-section near its interface 120 (see FIGS. 1C and 1D) to the transducer 104. This cross-section contrasts with conventional boosters, which have a round or circular cross-section at or near the interface with a transducer.

The present disclosure also contemplates an implementation of the assembly 100 in which a cut-and-seal operation is carried out. Those skilled in the art of ultrasonic welding will appreciate the term "cut-and-seal" refers to an operation in which parts are joined or sealed together while also being scored or cut to separate them (e.g., candy bar wrappers or non-woven materials for hygiene products). The term "cut" can refer to scoring in which such a small amount of remaining material persists after the scoring that the two parts can be readily separated. The term seal can refer to hermetic sealing or a sealing that creates an air- or water-tight seal at the sealed interface. Shown in FIG. 1F are two structures labeled 102, 150, 602. The upper structure can be a horn 102, an anvil 150, or a horn 602, while the lower structure can be an anvil 150, a horn 102, or a horn 602. In other words, both the upper and lower structures can both be horns (e.g., 102, 602) or one of the upper/lower structures can be an anvil 150. Referring to the upper structure, a scoring or cutting element 152 is shown in a central area of the part-interfacing surface of the horn/anvil 102, 150, 602, which also has two part-interfacing surfaces 154, 156 on either side of the scoring or cutting element 152, such as a blade. The cutting element 152 is about 20-30um shorter than a protruding depth of the part-interfacing surfaces 154, 156 to minimize wear on the blade while still scoring or cutting the film passing between the upper and lower structures.

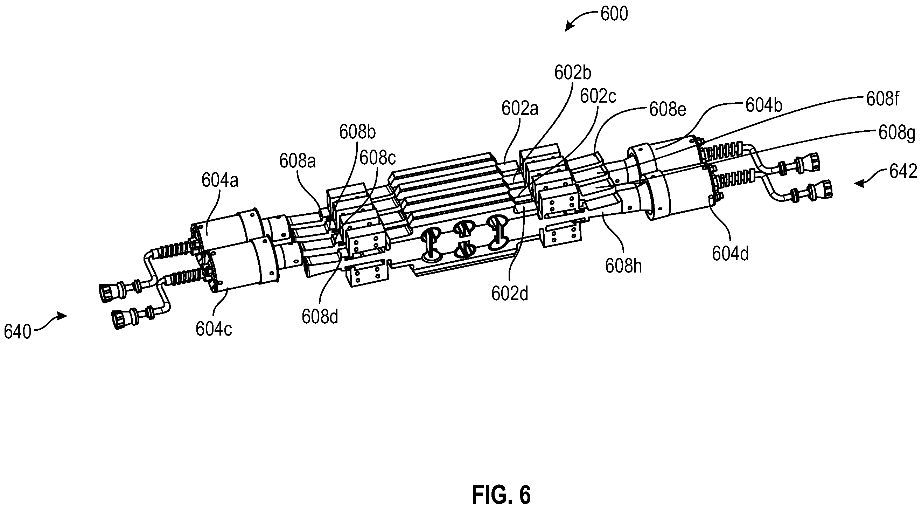

While only one horn 102 is shown in the assembly 100 in FIGS. 1A-1E, FIG. 6 illustrates an alternative assembly 600 having multiple horns 602a,b,c,d with integrated boosters 608a,b,c,d and 608e,f,g,h like the horn 102 and boosters 108a,b shown in FIGS. 1A-1E (the optional mounting plate has been removed for ease of illustration). While four are shown, the present disclosure contemplates any number of stacked arrangements of horn with boosters, including two, three, five, six, or more. Each of the horns 602a,b,c,d are positioned side by side relative to one another and are integrated with or coupled to a generally flat ultrasonic booster 608a,b,c,d,e,f,g,h. The transducers are coupled to every other booster as follows. A first transducer 604a is coupled to a first booster 608a on a first side 640 of the assembly 600. A second transducer 604b is coupled to a second booster 608e on the opposite side 642 of the assembly 600. A third transducer is coupled to a third booster 608c on the first side 640 of the assembly 600. A fourth transducer is coupled to a fourth booster 604d on the opposite side 642 of the assembly 600. This arrangement allows pairs of transducers on each side 640, 642 of the assembly 600 to cooperate in a push-pull scrubbing motion along the respective part-interfacing surfaces of the horns 602a,b,c,d. As can be seen in this illustration, the horns 602a,b,c,d can be positioned very close to one another thanks to the flat form factor of the booster 608, which does not become a limitation on the spacing between the adjacent horns 602. The transducers 604, when they have a larger cross-sectional area compared to the horn/booster 602/608, can be coupled to alternating boosters as shown on either side of the assembly 600.

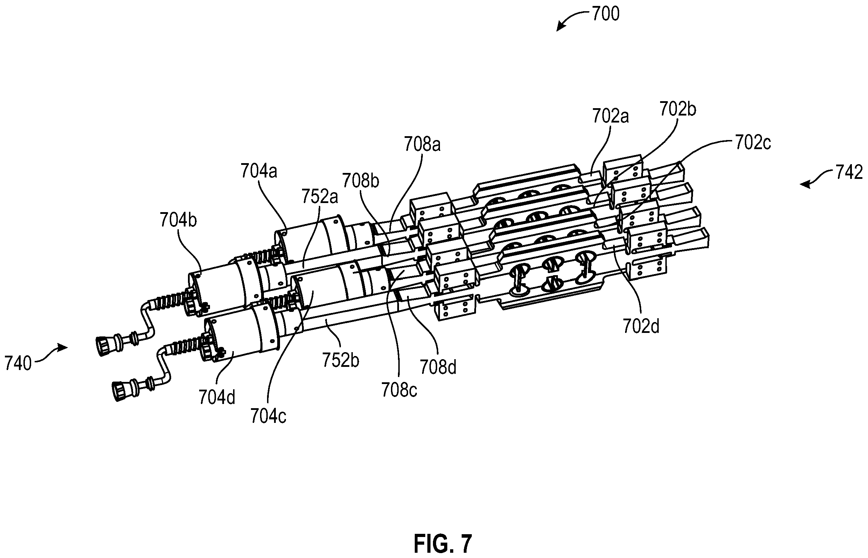

FIG. 7 illustrates an alternative mounting configuration of an ultrasonic transducer assembly 700 having multiple horn/booster devices and transducers arranged on one side 740 of the assembly 700. In this example, four horn/booster devices are shown, but the present disclosure contemplates any number of such devices, such as two, three, five, six, or more. Like the assembly 600 shown in FIG. 6, the assembly 700 allows multiple horns (with flat boosters) to be arranged in a side-by-side configuration and positioned closely together, not limited by the booster, which has the same flat structure as the horn, allowing the horns to be positioned much closer together, such as 2 inches of spacing. To accommodate the diameter of the transducer 704, an extra half wavelength of booster segment 752a, 752b can be added to alternating boosters 708b,d so that the transducers 704a,b,c,d can be positioned in a staggered configuration on the same side 740 of the assembly 700. This allows the transducers 704a,c to be coupled to the boosters 708a,c while the transducers 704b,d are coupled to the boosters 708b,d with the extended half wavelength. In this example, all transducers are arranged on one side 740 of the assembly 700. In other examples, one or more transducers can be arranged on the other side 742 of the assembly 700.

The part-interfacing surfaces 106a,b of the horns 102 disclosed herein, which contact the parts to be sealed refer to a contacting surface of the horn 102 that makes contact with the part to deliver via that surface the ultrasonic energy into an of the part to be welded (or sealed). The ultrasonic energy passes through the horn 102 away from the welding surface 106a,b and into the respective part that is contact the welding surface 106a,b of the corresponding horn 102. Each welding surface 106a, 106b of the horn 102 makes physical contact with a different area of the part to be welded (the part's sealing interface).

Optionally, in configurations having multiple ultrasonic generators to drive the transducers, the generator outputs can be synchronized in both frequency and phase. The generators (whether separate or integrated with dual outputs) can be arranged in a leader-follower relationship wherein one of the generators is assigned to be a leader. The phase of the leader generator is auto-locked to its ultrasonic stack's feedback using a Phase Lock Loop (PLL), and the leader generator instructs the follower via the communication connection to mimic the same phase at the zero crossings (at 0 or 180 degrees) and ignore the follower's own phase and frequency feedback. This allows the follower's phase to drift in the same manner as the leader. Phase drifts can occur, e.g., due to thermal effects, so by locking the phase of the follower to the leader allows the phase (and therefore by implication the frequency corresponding to the zero crossings of the ultrasonic energy signal's phase) to be synchronized in both transducers when two transducers are present in the assembly 100.

Example frequency of the ultrasonic energy delivered through the transducer 104 disclosed herein can be in a range from 15 to 70 kHz. The amplitude of the ultrasonic energy can be controlled independently on both transducers 104 when two transducers are present. A frequency of 35-70 kHz is particularly suited for sealing smaller or thinner packaging, and lower frequencies of 15-30 kHz can be used for sealing larger or thicker packaging.

An example "scrubbing" operation involves two transducers 104 synchronized in frequency and phase and positioned on opposite ends of the horn with one or both sides of the horns coming into contact to press against a to-be-sealed interface of a part, such as a thin film having a thickness in a range of 10-20um, 18-100um, or even over 100um, or a thin, non-woven material where the thickness can vary along the length of the interface. The variation in thickness can be ±15%-20% or greater at unpredictable locations along the length of the interface. Thus, while the application of energy may be uniform, the thickness of the interface (e.g., which can be composed of just two layers being sealed together) can vary along the length of the interface being sealed together, creating opportunities for small leaks or uneven welding of the seal. The so-called scrubbing action leverages the tiny, mechanical lengthwise motions produced by the horn's vibrating relative to one another as the frequency- and phase-synchronized ultrasonic energy is imparted through the transducers to the horn. These vibrations produce very short, rapid back and forth motions in the horn that resemble a scrubbing movement, which has been found to produce very high quality hermetic seals especially where the interface has a non-uniform thickness or a thick dimension, such as when the interface is a thin film or non-woven material.

While a thin film or non-woven material has been described in these examples, the scrubbing aspects disclosed herein also work with welding metal films, metal foils or thin metals (including dissimilar metals or metal foils)., or any combination of thin film, non-woven material, or metals. For example, scrubbing is particularly effective at sealing metals together, but also is effective at sealing dissimilar materials together, e.g., a non-woven material to a metal film or foil.

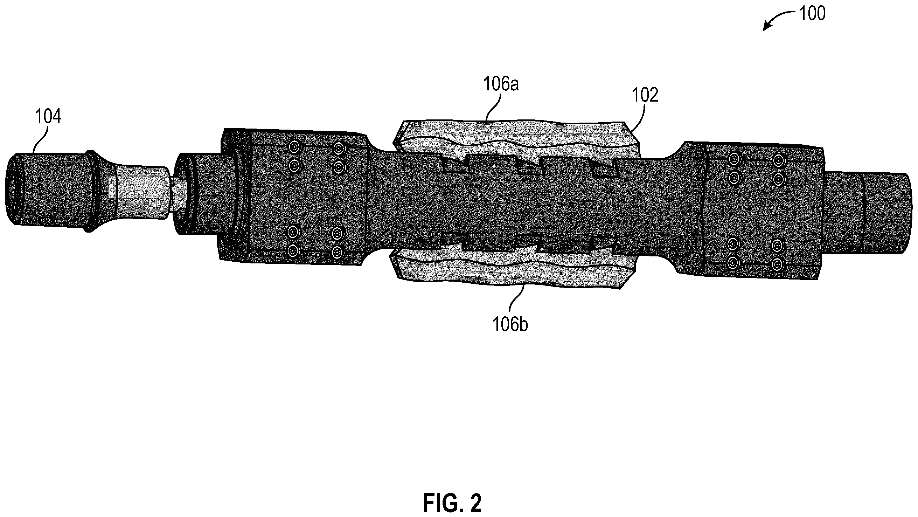

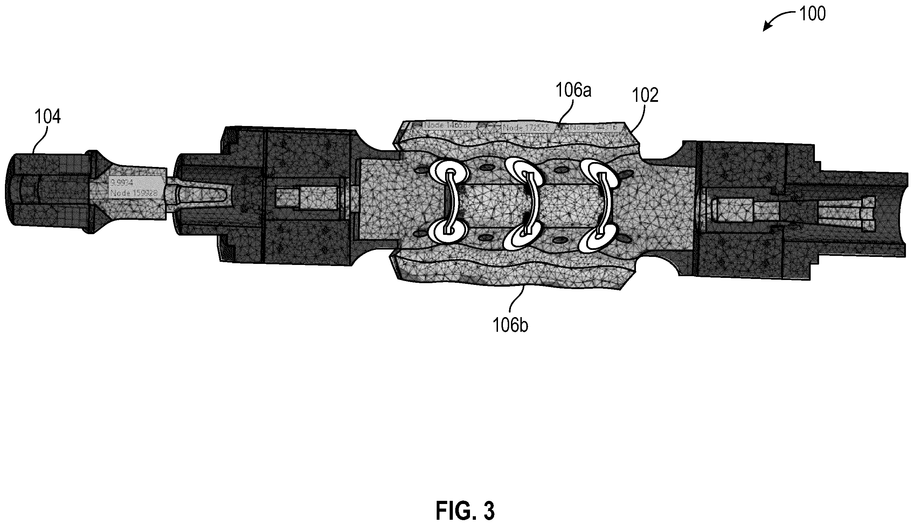

FIG. 2 is a perspective view of the amplitudes through the horn 102 during a scrubbing action, and FIG. 3 is a cross-sectional view of the same. The distortion or displacement of the horn 102 has been exaggerated for ease of illustration, but the images show how the horn 102 moves rapidly back and forth in a lateral direction to create a scrubbing action on its side part-interfacing surfaces 106a,b. When pressed against an anvil, such as the anvil 150 shown in FIG. 1F, the combination of the scrubbing action, which produces heat contributed by the ultrasonic energy, and the mechanical forces pressed against the part to be joined between the horn 102 and anvil 150, produces a seal at the interface where the scrubbing is carried out. This seal can be produced by actuating the horn 102 in and out or by rotating the horn 102 continuously such that it contacts the part twice per rotation.

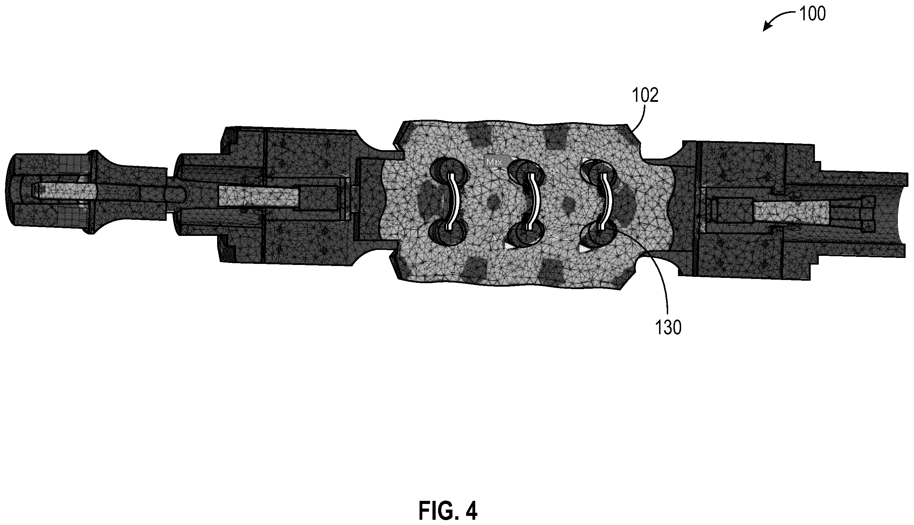

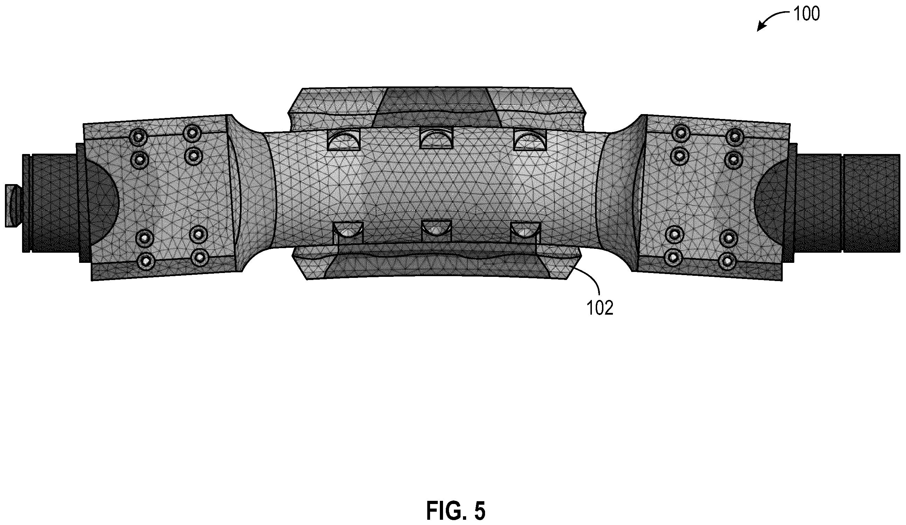

FIG 4. is a cross-sectional view of a stress distribution across the horn 102 during a scrubbing operation at 20 kHz. Here, the contribution of the compliant tabs 130 can be seen. FIG. 5 illustrates a perspective view of the assembly 100 showing deformation of the assembly 100 under 3000 N of load, where the deformation has been greatly exaggerated for ease of illustration. The mounting plate 140, when present as in this example, provides additional stiffness to the assembly 100 to resist deformation under load. The actual deformation is about 7. 8um or 3/10000^{th} inches.

The horn 102 disclosed herein can be made of metal, and can be rigidly mounted to a fixed frame or structure via one or more mounting fixed bearing mounts 120a,b, so that rotations of the horn 102 are uniform and not susceptible to wobble, allowing faster, consistent, and repeatably high quality welds for thousands and thousands of welds for many applications including packaging, flow wrap seal, and non-woven applications. In such a configuration the thin planar nature of this horn permits thicker materials or products to pass through between welds. The height of the materials or products can be up to 40mm in the example shown.

While some materials have been described herein as being suitable for sealing or welding using the synchronized dual-horn ultrasonic energy applications disclosed herein, including plastic and non-woven film, the present disclosure contemplates sealing or welding other types of same or dissimilar materials together, including parts made from polyester printed to aluminum then laminated to polyethylene, metal including aluminum, metal foil, fabric, film, polyethylene-coated fiberboard or liquid paperboard, and the like. The scrubbing motion or cross-seal aspects herein are particularly well suited for mono-layer plastic films, bioplastics, biodegradable or recyclable materials, which are not particularly well-suited for heat sealing but seal very well when ultrasonic energy is applied at the seal interface. Thinner layers can be sealed consistently and even hermetically according to the aspects disclosed herein.

Advantages of the systems and methods disclosed herein include:
Longer welding surfaces along the horn.
Minimal interfaces (fewer compared to conventional transducer-booster-horn configurations).
Stiffer assembly resistant to deformation under load.
Ability to maximize height of the horn, leading to greater cross-sectional moment of inertia and less bending of the horn.
Multiple horns can be placed side-by-side in a stacked configuration.
Horn assembly with high stiffness but a small footprint and densely packed assembly.
Uniform application of ultrasonic force across the entire width of the interface on the part to be sealed.
High throughput rate with high force application.

## Claims

1. An ultrasonic welding system having an ultrasonic stack assembly, the system comprising:
an ultrasonic stack assembly including an ultrasonic horn and a first transducer arranged to impart a first ultrasonic energy into the ultrasonic horn, the ultrasonic horn having a first part-interfacing surface configured to contact a part to be joined, the ultrasonic horn having a major surface adjacent to the first part-interfacing surface and an ultrasonic booster having a generally flat shape and a major surface that is generally coplanar with the major surface of the ultrasonic horn;
one or more controllers operatively coupled to the ultrasonic stack assembly, the one or more controllers operatively being configured to:
apply the first ultrasonic energy through the ultrasonic horn via the first transducer to cause the first part-interfacing surface to move back and forth along its length as the first ultrasonic energy is applied by the first transducer to the horn.

2. The system of claim 1, wherein the ultrasonic horn and the ultrasonic booster are machined from a single plate of metal such that the ultrasonic horn and the ultrasonic booster constitute a single, integrated piece.

3. The system of any of the previous claims, the ultrasonic stack assembly including a second transducer arranged to impart a second ultrasonic energy into the horn, the one or more controllers being configured to cause the second ultrasonic energy to be applied through the ultrasonic horn simultaneously with the first ultrasonic energy, wherein the first and second ultrasonic energies are synchronized in at least one of frequency or phase or in both frequency and phase.

4. The system of claim 2, wherein the ultrasonic horn has a length along a side thereof and a width along an end thereof, the length being longer than the width, and the ultrasonic booster extending away from the end of the ultrasonic horn, the end being interfaced with the first transducer, and wherein the ultrasonic horn and the ultrasonic booster have a generally flat profile along coplanar surfaces thereof.

5. The system of any of the previous claims, wherein a weld or seal is formed at the first part-interfacing surface without application of any external heat energy toward the weld or seal.

6. The system of any of the previous claims, the ultrasonic horn having a second part-interfacing surface along an opposite side to a side of the first part-interfacing surface.

7. The system of any of the previous claims, the ultrasonic welding assembly further including a fixed bearing mount through which a portion of the ultrasonic booster passes to interface with the first transducer.

8. The system of any of the previous claims, the ultrasonic horn having a second part-interfacing surface that is on an opposite side of the first part-interfacing surface, and wherein the one or more controllers is configured to cause the ultrasonic horn to rotate while at least the first ultrasonic energy is imparted to at least one of the first part-interfacing surface or the second part-interfacing surface, and wherein the ultrasonic horn optionally includes a cutting element arranged relative to the first part-interfacing surface and configured to score or cut a portion of the part to be joined.

9. The system of any of the previous claims, wherein the ultrasonic horn includes a compliant tab that is internal to the horn and configured to connect with a plate arranged on an exterior of the ultrasonic horn, and wherein optionally the compliant tab extends into an opening in the horn formed along an internal surface of the horn and is attached to the plate.

10. The system of claim 9, wherein the tab is a plurality of tabs, each being internal to the horn and configured to connect with respective mounting points on the plate to provide a node to inhibit internal movement or deflection of the ultrasonic horn relative to anti-nodal points along the ultrasonic horn.

11. A part made using the system of claim 1.

12. The system of claim 7, wherein the portion of the ultrasonic booster that passes through the fixed bearing mount modifies a vibrational amplitude passing between the first transducer and the ultrasonic horn such that the portion of the ultrasonic booster has a reduced width dimension relative to an overall width dimension of the ultrasonic horn.

13. The system of claim 1, wherein the ultrasonic booster is coupled to the ultrasonic horn and to the first transducer, the ultrasonic booster having a generally square or rectangular cross-section.

14. The system of claim 1, wherein the ultrasonic horn is at least two ultrasonic horns positioned side by side relative to one another, each of the at least two ultrasonic horns being integrated with or coupled to a generally flat ultrasonic booster, the ultrasonic transducer assembly including a second transducer coupled to a second of the at least three ultrasonic horns, the first transducer and the second transducer being on opposite sides of the ultrasonic transducer assembly or being on the same side of the ultrasonic transducer assembly.

15. The system of claim 1, wherein the ultrasonic booster is a tuned as a half-wave component.

16. The system of claim 1, further comprising an anvil arranged at a distance from the first part-interfacing surface of the ultrasonic horn, the anvil including a cutting element arranged relative to a part-interfacing surface of the anvil and configured to score or cut a portion of the part to be joined.
